# FASCICULE DE BREVET EUROPEEN

(11) **EP 1 572 598 B1**
(45) Date de publication et mention de la délivrance du brevet: **17.01.2007**
(21) Numéro de dépôt: 03766408.3
(22) Date de dépôt: 25.07.2003
(51) Int. Cl.: C04B 2/00

(54) **CERAMIQUE CONDUCTRICE PRETRAITEE PAR OXYDATION POUR ANODE DE ZINC**
DURCH OXIDATION VORBEHANDELTER KERAMIKLEITER FÜR EINE ZINKANODE
CERAMIC CONDUCTOR PRE-TREATED BY OXIDISING FOR A ZINC ANODE

(30) Priorité: 30.07.2002 FR 0209644
(43) Date de publication de la demande: 14.09.2005
(73) Titulaire: S.C.P.S. Société de Conseil et de Prospective Scientifique S.A., 93115 Rosny-Sous-Bois (FR)
(72) Inventeur: BUGNET, Bernard, F-94420 Le Plessis Trevise (FR); DONIAT, Denis, F-75116 Paris (FR); ROUGET, Robert, F-75016 Paris (FR)
(74) Mandataire: Savatier, Yves
(86) Numéro de dépôt international: PCT/EP2003/050334
(87) Numéro de publication internationale: WO 2004/013064

(56) Documents cités:
- EP-A- 1 024 545
- US-A- 4 041 221
- SHIN C H ET AL: "PREPARATION AND CHARACTERIZATION OF TITANIUM OXYNITRIDES WITH HIGH SPECIFIC SURFACE AREAS" JOURNAL OF SOLID STATE CHEMISTRY, ORLANDO, FL, US, vol. 95, 1991, pages 145-155, XP002051893 ISSN: 0022-4596
- PATENT ABSTRACTS OF JAPAN vol. 013, no. 224 (C-599), 24 mai 1989 (1989-05-24) & JP 01 037408 A (TORAY IND INC), 8 février 1989 (1989-02-08)
- MCLARNON F R ET AL: "THE SECONDARY ALKALINE ZINC ELECTRODE" JOURNAL OF THE ELECTROCHEMICAL SOCIETY, ELECTROCHEMICAL SOCIETY. MANCHESTER, NEW HAMPSHIRE, US, vol. 138, no. 2, 1 février 1991 (1991-02-01), pages 645-664, XP000278364 ISSN: 0013-4651
- PATENT ABSTRACTS OF JAPAN vol. 007, no. 284 (E-217), 17 décembre 1983 (1983-12-17) & JP 58 163162 A (SANYO DENKI KK), 27 septembre 1983 (1983-09-27)
- PATENT ABSTRACTS OF JAPAN vol. 010, no. 054 (E-385), 4 mars 1986 (1986-03-04) -& JP 60 208053 A (FURUKAWA DENCHI KK), 19 octobre 1985 (1985-10-19)

## Description

La présente invention concerne le domaine des générateurs électrochimiques, et plus particulièrement celui des accumulateurs et systèmes métal-air.

Elle est spécialement relative aux générateurs secondaires à anode de zinc et est destinée à obtenir un haut niveau de cyclabilité de l'électrode de zinc.

L'électrode de zinc est bien connue de l'homme de l'art pour ses performances élevées. Elle peut par ailleurs être mise en oeuvre dans divers systèmes électrochimiques secondaires : générateurs alcalins air-zinc, nickel-zinc, et argent-zinc, générateurs à électrolytes salins brome-zinc et chlore-zinc.

Le zinc constitue un matériau actif anodique attractif, présentant un potentiel redox fortement négatif de -1,25 V/NHE pour le couple Zn/Zn(OH)₂. L'électrode de zinc offre une capacité massique théorique de 820 Ah/kg. Elle permet ainsi par exemple d'obtenir des énergies massiques théoriques de 334 Wh/kg pour le couple nickel-zinc (NiZn), et de 1.320 Wh/kg pour le couple zinc-oxygène. Pour l'accumulateur NiZn, l'énergie massique pratique peut se situer entre environ 50 et 100 Wh/kg, la tension étant par ailleurs de 1,65 Volt, au lieu de 1,2 Volt pour les autres systèmes alcalins.

On peut également souligner, au titre des avantages du zinc, d'une part son caractère de non-toxicité pour l'environnement (production, utilisation, déchets), d'autre part son faible coût, très inférieur à ceux des autres matériaux anodiques d'accumulateurs alcalins (cadmium et hydrures métalliques), ou des accumulateurs au lithium.

Pourtant, le développement industriel de systèmes rechargeables utilisant l'électrode de zinc s'est heurté à une difficulté majeure, celle de son insuffisance de durée de vie en cyclage.

Les réactions qui interviennent au niveau de l'anode sont les suivantes en accumulateur alcalin :
charge
   Zn + 2OH⁻ Δ ZnO + H₂O + 2e⁻ avec ZnO + H₂O + 2OH⁻ Δ [Zn(OH)₄]²⁻
   décharge

C'est en fait d'une manière générale à la formation de dépôts de structure modifiée par rapport à leur forme d'origine, et souvent qualifiés de dendritiques, spongieux ou pulvérulents, que conduit la recharge de l'électrode de zinc à partir de ses oxydes et hydroxydes et des zincates. Ce phénomène intervient de surcroît dans un très large domaine de densités de courant.

Les recharges successives conduisent ainsi rapidement à des croissances ou poussées anarchiques de zinc à travers les séparateurs et à la mise en court-circuit avec les électrodes de polarité opposée.

Quant aux dépôts de type pulvérulent ou spongieux, ils ne permettent pas la reconstitution d'électrodes aptes à un fonctionnement satisfaisant et durable, puisque l'adhérence de la matière active est insuffisante.

Plus encore, la réduction des oxydes, hydroxydes et zincates en zinc au niveau de l'anode, lors des phases de recharge, se caractérise également par des changements de morphologie de l'électrode elle-même. On observe, selon les modes de fonctionnement des accumulateurs, différents types de modifications de forme de l'anode, de par un phénomène de redistribution non uniforme du zinc au cours de sa formation. Cela peut notamment se traduire par une densification nuisible de la masse active anodique en surface de l'électrode, le plus souvent au niveau de sa zone centrale. Dans le même temps, on assiste en général à une diminution de la porosité de l'électrode, ce qui contribue à accélérer la formation préférentielle du zinc à sa surface.

Ces handicaps importants, réduisant le nombre de cycles réalisables à quelques dizaines seulement - niveau insuffisant pour conférer un intérêt économique à un système secondaire - ont conduit à la réalisation de très nombreux travaux ayant pour objectif d'améliorer les caractéristiques de dépôt du zinc en recharge, en vue d'accroître le nombre de cycles de charges - décharges que pourrait accepter le générateur.

Des voies très diverses ont été explorées afin de tenter de minimiser ou de retarder le plus longtemps possible ces défauts de formation du zinc. Parmi celles-ci, on peut en particulier signaler les suivantes :
■ des méthodes "mécaniques", visant à réduire la formation ou la poussée anarchique de zinc, ou à éviter les dépôts pulvérulents : circulation de l'électrolyte et / ou de l'électrode de zinc sous forme dispersée; vibrations imposées aux électrodes; utilisation de séparateurs résistants à la perforation par les dendrites, souvent en couches multiples, et même de membranes échangeuses d'ions, pour prévenir la migration des zincates;
■ des méthodes "électriques", destinées à améliorer les conditions de formation du dépôt de zinc : contrôle des paramètres de charge (intensité, tension, ...); emploi de courants pulsés, y compris avec inversions de courant pour tenter de dissoudre les dendrites en formation;
■ des méthodes "chimiques" et "électrochimiques" : mise en oeuvre d'additifs, incorporés à l'électrolyte (fluorure, carbonate, ...) et/ou à la matière active anodique (calcium, baryum, ...), et dilution de l'électrolyte afin notamment de limiter la solubilité des zincates et de former de l'oxyde de zinc et des composés insolubles du zinc.

Ces diverses techniques peuvent être mises en oeuvre isolément ou en combinaison.

Leurs effets positifs sont en tout état de cause limités et se sont avérés insuffisants pour conférer aux générateurs secondaires à anode de zinc, et en particulier au couple NiZn pourtant théoriquement très attrayant, une quelconque viabilité économique : ils ne permettent guère d'atteindre ou de dépasser une centaine de cycles effectués avec des niveaux de profondeur de décharge qui soient significatifs.

Ces techniques présentent par ailleurs, pour certaines, des effets négatifs pénalisants, tels que :
- augmentation de la résistance interne de l'accumulateur (due à certains additifs
ou à la dilution de l'électrolyte),
- dégradation de la durée de vie de la cathode de nickel (par emploi de certains additifs),
- complexité mécanique de fonctionnement (pour les systèmes à circulation),
- augmentations de volume et de masse du système (dégradation des performances techniques spécifiques, en termes d'énergies massique et volumique),
- accroissement du coût (perte de l'avantage économique potentiel).

Une innovation importante a été apportée et décrite par l'exposé d'invention de la demande de brevet français 99 00859, la technologie élaborée pouvant autoriser la réalisation de plusieurs centaines de cycles dans une large gamme de régimes de fonctionnement et jusqu'à des profondeurs de décharge très élevées, grâce à la mise en oeuvre de moyens destinés à accroître le rendement d'utilisation de la matière active, par amélioration de la percolation des charges en son sein.

La présente invention repose sur l'observation qu'un drainage insuffisant des charges au sein de la matière active conduit à favoriser la formation du dépôt de zinc, lors des recharges, en des sites ne représentant qu'un pourcentage limité de l'ensemble de la masse active. C'est donc alors à partir de sites d'une surface totale limitée par rapport à la surface développée globale de la matière anodique, que s'effectue cette croissance du zinc, phénomène se traduisant le plus souvent par un caractère anarchique du dépôt pouvant conduire à des poussées à travers les séparateurs, ou par la densification du dépôt. La technologie décrite dans le document sus-mentionné montre que ce mécanisme peut être fortement réduit lorsque l'on parvient à réaliser le dépôt de la même quantité totale de zinc sur une surface beaucoup plus importante, en multipliant les sites de formation du dépôt, dans tout le volume de l'électrode.

Cette technologie, selon une mise en oeuvre préférentielle, se traduit par l'utilisation, au sein de l'anode de zinc, d'un double ou triple niveau de collecte électrique :
- un réseau collecteur principal : un support d'électrode de type "mousse métallique" (structure alvéolaire réticulée),
- un réseau conducteur secondaire : une dispersion de particules céramiques conductrices chimiquement inertes dans l'accumulateur,
- un possible réseau conducteur tertiaire complémentaire : une dispersion de bismuth dans la masse active anodique.

Une "masse antipolaire", pouvant être constituée d'hydroxyde de nickel dans le cas de réalisation d'accumulateurs nickel-zinc, peut également être introduite dans l'anode de zinc, et contribue de manière significative au niveau de performances obtenu.

La présente invention a pour objet d'améliorer la cyclabilité de l'électrode de zinc par le traitement préalable de la céramique conductrice, avant son ajout à la masse active de l'électrode de zinc, le traitement ayant pour finalité de conférer à ladite poudre de céramique une seconde fonction, de rétention des zincates formés lors de la décharge de l'anode de zinc.

Dans le "Journal of the Electrochemical Society", Vol. 145 n°4, page 1211, 1988, C.F. Windisch et al. décrivent l'évolution de disques polis de nitrure de titane (TiN), immergés durant 136 jours dans une solution de potasse concentrée.

Il se forme à la surface du matériau des composés identifiés comme des titanates de potassium faiblement cristallisés.

Comme le souligne J. Lehto dans le brevet US 6.106.799, la distinction entre titanates et oxydes de titane hydratés n'est pas toujours aisée, les oxydes de titane hydratés pouvant être considérés comme des formes amorphes ou semi-cristallines des titanates.

Ce même auteur rappelle que les titanates et les oxydes de titane hydratés ont des propriétés d'échange d'ions, mises à profit pour le traitement d'effluents contenant des ions radioactifs.

Par ailleurs, les nitrures de titane, en particulier sous forme de poudre, ne sont pas inertes vis-à-vis de l'oxygène de l'air, et cela même à température ambiante.

Il se forme, à la surface des grains, des oxynitrures de titane et des oxydes de titane peu ou pas cristallisés, qui peuvent être mis en évidence par analyse XPS.

L'analyse RX des poudres de TiN ne révèle pas nécessairement la présence d'oxyde de titane, mais on peut observer une modification du paramètre de maille du nitrure qui correspond à des composés sous stoechiométrique en azote.

Les poudres de TiN commerciales sont généralement préparées par nitruration du titane. Elles présentent toujours des déficits en azote de 0,5 à 2 % par rapport à la stoechiométrie qui est de 22,62 % en poids. Ce déficit peut être encore plus important lorsque les poudres sont préparées par des techniques telles que la nitruration du dioxyde de titane par l'ammoniac, ou la synthèse par réaction thermique auto-propagée à partir d'oxyde de titane, d'halogénures de titane, etc.

Les oxynitrures de titane répondent à la formule chimique générale TiNₓO_{y}, x et y variant entre 0,01 et 0,99.

Pour de faibles teneurs en oxygène, la structure cristalline (cubique faces centrées) et les paramètres correspondants des oxynitrures de titane sont quasi identiques à ceux du nitrure, ce qui les rend difficilement identifiables par analyse RX. Les oxynitrures de titane sont de couleur noire, et si le TiN est de couleur dorée, une oxydation progressive du TiN conduit à un changement de couleur qui va aller du bronze au brun, puis au noir.

Cette caractéristique a été exploitée pour la préparation de pigments noirs, substituts des poudres de carbone, d'oxyde de fer ou de bioxyde de manganèse.

Diverses techniques sont décrites dans la littérature pour préparer des oxynitrures de titane :
- la réduction partielle du dioxyde de titane par l'ammoniac,
- l'oxydation partielle de TiN très divisé,
- la fabrication de TiN par décharge plasma à partir de tétrachlorure de titane.

La température d'oxydation des poudres de TiN, qui s'accompagne d'une prise de poids, est étroitement liée à la nature des échantillons. Des poudres fines de diamètre d'environ 5 µm commencent à s'oxyder vers 350°C, alors que des poudres plus grosses de 50 µm le feront vers 500°C (P. Lefort et al., Journal of Less Common Metals, n° 60, page 11, 1978).

Un traitement de poudre de TiN à haute température et de manière prolongée, conduit à la formation d'oxyde de titane de type rutile.

Sur la base de ces connaissances, les auteurs de la présente invention ont aussi découvert qu'un prétraitement d'oxydation des poudres de TiN, dont la mise en oeuvre dans une électrode de zinc est décrite dans le brevet français 99 00859, améliorait l'aptitude au cyclage de l'électrode, du fait d'une réactivité accrue de la poudre céramique vis-à-vis de l'électrolyte, conduisant à la formation d'oxydes de titane hydratés pouvant eux-mêmes se transformer en titanates partiellement cristallisés.

Il est ainsi possible de conférer à la poudre céramique, dispersée dans la masse anodique, deux fonctions essentielles au bon fonctionnement de l'électrode de zinc :
- une fonction de conducteur électronique, qui va contribuer à l'obtention d'une meilleure homogénéité de répartition de la formation de zinc métallique au sein de la masse active, lors des charges successives,
- une fonction de rétention des zincates issus de l'oxydation du zinc en décharge de l'accumulateur, grâce à la formation de composés adsorbants générés par le prétraitement imposé à la poudre de TiN.

Du fait de ce prétraitement, qui s'applique à des poudres de TiN elles-mêmes obtenues par des procédés divers, la formation de sites fixateurs des zincates opérée par modification de la surface du TiN selon un mécanisme décrit par Windish et al., va pouvoir être fortement accélérée. Ceci va permettre, dès les premiers cycles de formation de l'électrode de zinc, de réaliser des dépôts uniformes de zinc, grâce à cette seconde fonction conférée aux poudres céramiques. La réalisation de dépôts les plus uniformes possible du zinc au sein de l'anode, dès les tous premiers cycles de recharge, est essentielle à l'obtention d'une importante durée de vie en cyclage des générateurs à anode de zinc.

Le prétraitement oxydant doit être pratiqué, selon la présente invention, en évitant la formation d'oxyde de titane en couche importante, qui provoquerait une diminution excessive de la conduction électronique des grains, et par ailleurs serait totalement inerte vis-à-vis du milieu alcalin. Ce prétraitement dépend de la nature et de la granulométrie du TiN utilisé. Plus la taille des particules est faible, plus la réactivité du TiN vis-à-vis de l'oxygène est élevée. Pour l'utilisation en tant qu'additif des anodes de zinc, les poudres de TiN préférées présentent avantageusement une granulométrie essentiellement inférieure à 10 microns.

Il est plus aisé d'effectuer le prétraitement sous air. On peut toutefois utiliser de l'oxygène pur, ou des mélanges de gaz inertes et d'oxygène. Le gaz inerte peut être de l'azote, de l'hélium ou de l'argon. La teneur en oxygène peut être comprise entre 1 % et 99 %.

L'influence de la pression du gaz est peu sensible, et on peut notamment réaliser le traitement à pression ambiante dans le cas de l'air, ou avec une faible surpression dans le cas de l'oxygène ou des mélanges synthétiques de gaz, surpression comprise par exemple entre 0,1 kPa et 5 kPa.

La durée du traitement dépendra principalement de la composition du gaz (en particulier de la teneur en oxygène), de la température et de la taille des grains.

Le traitement étant réalisé en présence d'oxygène, par exemple à l'air, à pression ambiante, la température est comprise entre environ 150 et 800°C, pour des durées de traitement comprises entre 5 minutes et 15 heures. Il faut veiller, lors du traitement de poudres de TiN très fines, à effectuer une montée de la température qui soit progressive pour éviter une oxydation brutale de la poudre par inflammation.

La poudre de nitrure de titane modifiée selon la présente invention, obtenue après un tel prétraitement oxydant, se manipule sans autre précaution particulière que celles recommandées pour les poudres de nitrure de titane fabriquées selon les divers procédés de fabrication déjà mentionnés.

Selon la présente invention, la réalisation des anodes de zinc se fera de préférence selon les procédés de fabrication décrits dans les demandes de brevets français 99 00859 et 01 10488.

On rappellera en particulier qu'à ce stade, selon le document FR 99 00859, l'anode dispose de deux, voire trois, réseaux de collecte électrique, qui sont autant d'ensembles de sites potentiels de germination du zinc en recharge, même si la poudre de céramique conductrice constitue le principal d'entre eux :
- le support et collecteur de charges de l'électrode, préférentiellement de type mousse métallique réticulée,
- la dispersion de particules de céramique conductrice dans la masse anodique,
- une possible dispersion de bismuth au sein de ladite masse anodique.

Outre les particules de TiN prétraitées qui constituent ici la céramique conductrice et qui vont représenter les principaux sites conducteurs de fixation des zincates, il peut également être utile, comme décrit dans le document FR 01 10488, d'introduire dans la masse anodique des additifs tels que des titanates alcalins ou alcalino-terreux, et également d'ajouter au mélange céramique conductrice - titanates, ou à la masse active, une quantité d'un additif constitué d'au moins un composé à base d'aluminium et / ou de calcium, et / ou une quantité d'un additif constitué d'au moins un composé formant, au contact de l'électrolyte alcalin, des composés solubles de l'aluminium compris entre environ 1 et 5 % en poids par rapport à l'oxyde de zinc.

On peut également ajouter à l'électrolyte, une quantité d'un additif constitué d'au moins un composé soluble de l'aluminium et / ou du calcium, comprise entre environ 1 et 5 % en poids par rapport à l'oxyde de zinc.

Les auteurs ont pu observer que le pouvoir échangeur d'ions des céramiques prétraitées selon l'invention est amélioré par l'adjonction d'aluminium et/ou de calcium sous des formes diverses, dans la masse active anodique ou dans l'électrolyte.

L'anode de zinc mise en oeuvre peut avantageusement être du type électrode empâtée-plastifiée, et donc réalisée par empâtage, enduction, ou remplissage par tout moyen, en phase liquide ou sèche, d'un support tridimensionnel à haute porosité du type mousse métallique alvéolaire réticulée, avec une pâte contenant notamment de la poudre d'oxyde de zinc, la dispersion de particules de céramiques, un agent plastifiant, et éventuellement un agent de mise en suspension.

A titre d'illustration non limitative de la présente invention, on décrit ci-après un exemple avantageux de réalisation, qui permet de mesurer l'intérêt de la présente invention.

Des accumulateurs nickel-zinc sont réalisés avec des cathodes de nickel empâtées-plastifiées, au sein d'un support en mousse de nickel. Les anodes de zinc sont réalisées par empâtage d'un support en mousse de cuivre, recouverte de plomb par dépôt électrolytique, de grade 45 PPI (pores par inch) soit 18 pores par centimètre linéaire. La densité du support est de 450 g / m².

La masse active des électrodes de zinc est préparée pour former une pâte de la composition suivante :
- oxyde de zinc,
- nitrure de titane ⁽¹⁾ : 15 % ⁽²⁾,
- titanate de calcium : 2,5 % ⁽²⁾,
- oxyde de bismuth : 5 % ⁽³⁾,
- hydroxyde de nickel : 5 % ⁽³⁾,
- agent plastifiant : PTFE ⁽⁴⁾,
- agent de mise en suspension : eau.
⁽¹⁾ granulométrie moyenne : 1 micron environ
⁽²⁾ en poids par rapport à la masse active
⁽³⁾ en poids par rapport à l'oxyde de zinc
⁽⁴⁾ introduit sous la forme d'une suspension aqueuse à 60 %, la concentration en
PTFE s'établissant à 4 % en poids par rapport à l'oxyde de zinc.

La poudre de TiN utilisée pour les électrodes de type A est un produit du commerce. La poudre de TiN utilisée pour les électrodes de type B est identique à la poudre utilisée pour les électrodes A, mais a subit un prétraitement d'oxydation de 30 minutes à 250°C sous air selon la présente invention.

Pour toutes les anodes réalisées, les particules solides constituant la masse active ont fait l'objet d'un malaxage poussé avant adjonction d'eau, afin d'obtenir leur mélange intime et aussi homogène que possible.

L'électrolyte utilisé est de la potasse (KOH), d'une concentration égale à 5 N. Il est saturé en zincates et contient 10 g/l de lithine (LiOH).

Une fois introduite au sein du support métallique, dont l'épaisseur initiale est de 2 mm, la masse active est séchée, et l'anode de zinc ainsi constituée est compactée, sous une pression de compactage de 80 kg par centimètre carré. L'épaisseur est ramenée à 0,8 mm.

L'électrolyte utilisé est de la potasse (KOH), d'une concentration égale à 5 N. Il est saturé en zincates et contient 10 g/l de lithine (LiOH).

On réalise des montages en accumulateurs nickel-zinc ouverts, en associant deux cathodes de nickel à une anode de zinc, afin que seule cette dernière définisse la capacité de l'accumulateur, et que ses caractéristiques propres puissent être suivies lors des tests.

On emploie une combinaison de deux séparateurs entre les électrodes de polarités opposées. L'un est une membrane microporeuse, telle que celle proposée sous la marque commerciale "Celgard" par la société Hoescht Celanese. L'autre est un séparateur non tissé en polyamide ou polypropylène, tel que le produit de référence "FS 2115" de la société Carl Freudenberg.

Les accumulateurs ainsi réalisés sont soumis à des essais de cyclage de longue durée, selon des procédures standardisées. Le type de cycles de charge-décharge utilisé, à courant imposé, est le suivant : régime de C/4 (charge ainsi que décharge effectuées chacune en 4 heures, le courant appliqué correspondant au quart de la capacité nominale de l'élément), avec une profondeur de décharge de 80 % environ; un cycle comportant une décharge totale (100 % de profondeur) est réalisé tous les dix cycles.

Les électrodes de type A conservent plus de 80 % de leur capacité nominale durant 300 à 400 cycles selon les exemplaires, avant de chuter très rapidement en capacité.

Les électrodes de type B ont conservé plus de 80 % de leur capacité nominale durant plus de 1.000 cycles, et ont passé les 1.500 cycles avec une capacité supérieure à 70 % de la capacité nominale. Les cyclages ont été arrêtés après 2000 cycles sans que l'on observe une dérive brutale des capacités.

Il est donc montré, dans le cadre de la présente invention, que les hauts niveaux de performances atteints à travers l'adjonction de céramiques conductrices à la masse anodique, sont très fortement renforcés par un prétraitement oxydant imposé aux particules de TiN, prétraitement effectué à chaud en présence d'oxygène, et conduisant, en surface des particules de la céramique, à la formation d'oxydes et d'oxynitrures de titane.

Ceux-ci, au contact de l'électrolyte alcalin des générateurs à anode de zinc, peuvent eux-mêmes se transformer en titanates partiellement cristallisés, et constituer des zones de fixation des zincates, conférant aux particules de céramique leur seconde fonction de rétention des zincates sur leurs sites mêmes de formation (par oxydation du zinc métallique en décharge).

Ce rôle vient s'ajouter à la fonction première de conduction électronique des particules de la céramique, fonction qui favorise la réduction, sur place, desdits zincates en zinc métallique lors de la charge du générateur.

Cette double fonction de l'additif céramique prétraité selon l'invention, permet alors d'éviter très durablement les modifications morphologiques de l'anode de zinc habituellement observées et qui conduiraient à une courte durée de vie en cyclage.

Sans sortir du cadre de la présente invention, il est possible de la mettre en oeuvre en lui associant tout ou partie des additifs ou procédures de charges décrits dans la littérature et appliqués à l'utilisation d'électrodes de zinc.

Naturellement, et comme il résulte d'ailleurs largement de ce qui précède, l'invention n'est pas limitée aux modes de réalisation particuliers qui ont été décrits à titre d'exemples. L'invention ne se limite pas aux exemples qui en ont été donnés, mais en embrasse toutes les variantes.

## Revendications

1. Anode de zinc pour générateur électrochimique secondaire alcalin contenant dans sa masse active un additif constitué d'une poudre de céramique conductrice de particules de nitrure de titane, **caractérisé en ce que** la poudre de céramique conductrice de particules de nitrure de titane a subi avant son incorporation dans la masse active de ladite électrode un traitement oxydant à une température comprise entre 150°C et 800°C.

2. Anode de zinc selon la revendication 1, **caractérisée en ce que** les particules de nitrure de titane présentent une granulométrie essentiellement inférieure à 10 µm.

3. Anode de zinc selon la revendication 1 ou 2, **caractérisée en ce que** le traitement oxydant est effectué en présence d'oxygène.

4. Anode de zinc selon la revendication 1 ou 2, **caractérisée en ce que** le traitement oxydant est effectué sous air.

5. Anode de zinc selon l'une des revendications précédentes, **caractérisée en ce que** le traitement oxydant est effectué pendant une durée comprise entre cinq minutes et quinze heures.

6. Anode de zinc selon l'une des revendications précédentes, **caractérisée en ce que** le nitrure de titane est obtenu par nitruration du titane.

7. Anode de zinc selon l'une des revendications 1 à 5, **caractérisée en ce que** le nitrure de titane est obtenu par nitruration du dioxyde de titane.

8. Anode de zinc selon l'une des revendications 1 à 5, **caractérisée en ce que** le nitrure de titane est obtenu par réaction thermique auto-propagée à partir d'oxyde de titane ou d'halogénures de titane.

## Claims

1. A zinc anode for an alkaline secondary electrochemical generator comprising in its active mass an additive constituted of a conductive ceramic powder of fine titanium nitride particles, **characterised in** the conductive ceramic powder of fine titanium nitride particles has undergone before being incorporated into the active mass of said electrode an oxidising pre-treatment at a temperature between 150°C and 800°C.

2. A zinc electrode according toclaim 1, **characterised in that** the titanium nitride particles have a particle size essentially less than 10 microns.

3. A zinc electrode according to claim 1 or 2, **characterised in that** the oxidising treatment is performed in the presence of oxygen.

4. A zinc electrode according to claim 1 or 2, **characterised in that** the oxidising treatment is performed in air.

5. A zinc electrode according to any one of the preceding claims, **characterised in that** the oxidising treatment is performed for a period of between five minutes and fifteen hours.

6. A zinc electrode according to any of the preceding claims, **characterised in that** the titanium nitride is obtained by nitriding titanium.

7. A zinc electrode according to nay of claims 1 to 5, **characterised in that** the titanium nitride is obtained by nitriding titanium dioxide.

8. A zinc electrode according to any of claims 1 to 5, **characterised in that** the titanium nitride is obtained by a self-propagating thermal reaction from titanium oxide or titanium halides.

## Patentansprüche

1. Zinkanode für wiederaufladbare alkalische Batterie, die in ihrer aktiven Masse einen Zusatz enthält, der aus einem leitenden keramischen Pulver aus Titannitridteilchen besteht, **dadurch gekennzeichnet, dass** das leitende keramische Pulver aus Titannitridteilchen vor seiner Einarbeitung in die aktive Masse der Elektrode eine oxidierende Behandlung bei einer Temperatur zwischen 150 °C und 800 °C erfahren hat.

2. Zinkanode nach Anspruch 1, **dadurch gekennzeichnet, dass** die Titannitridteilchen eine Komgrösse von im Wesentlichen weniger als 10 µm aufweisen.

3. Zinkanode nach Anspruch 1 oder 2, **dadurch gekennzeichnet, dass** die oxidierende Behandlung in Gegenwart von Sauerstoff erfolgt.

4. Zinkanode nach Anspruch 1 oder 2, **dadurch gekennzeichnet, dass** die oxidierende Behandlung in Luft erfolgt.

5. Zinkanode nach einem der vorangehenden Ansprüche, **dadurch gekennzeichnet, dass** die oxidierende Behandlung über eine Zeitdauer zwischen fünf Minuten und fünfzehn Stunden hinweg erfolgt.

6. Zinkanode nach einem der vorangehenden Ansprüche, **dadurch gekennzeichnet, dass** das Titannitrid durch Nitridierung von Titan gewonnen wird.

7. Zinkanode nach einem der Ansprüche 1 bis 5, **dadurch gekennzeichnet, dass** das Titannitrid durch Nitridierung von Titandioxid gewonnen wird.

8. Zinkanode nach einem der Ansprüche 1 bis 5, **dadurch gekennzeichnet, dass** das Titannitrid durch eine sich selbst unterhaltende thermische Reaktion aus Titanoxid oder Titanhalogeniden gewonnen wird.
